# EUROPEAN PATENT SPECIFICATION

(11) **EP 4 531 002 B1**
(45) Date of publication and mention of the grant of the patent: **11.11.2026**
(21) Application number: 24201913.1
(22) Date of filing: 23.09.2024
(51) Int. Cl.: G06V 20/52, G06V 10/764

(54) **IMAGE ANALYSIS APPARATUS, IMAGE ANALYSIS METHOD, AND IMAGE ANALYSIS PROGRAM**
BILDANALYSEVORRICHTUNG, BILDANALYSEVERFAHREN UND BILDANALYSEPROGRAMM
APPAREIL D'ANALYSE D'IMAGE, PROCÉDÉ D'ANALYSE D'IMAGE ET PROGRAMME D'ANALYSE D'IMAGE

(30) Priority: 29.09.2023 JP 2023170694
(43) Date of publication of application: 02.04.2025
(73) Proprietor: Yokogawa Electric Corporation, Tokyo 180-8750 (JP)
(72) Inventor: WADA, Atsushi, Musashino-shi, Tokyo, 180-8750 (JP); KOJIMA, Osamu, Musashino-shi, Tokyo, 180-8750 (JP)
(74) Representative: Winter, Brandl - Partnerschaft mbB

(56) References cited:
- EP-A1- 4 207 098
- JP-A- 2020 071 665
- TAPO: "How to use the Detection function of the Tapo&Kasa cameras | TP-Link Nederland", 13 September 2023 (2023-09-13), pages 1 - 20, XP093248042, Retrieved from the Internet <URL:https://www.tp-link.com/nl/support/faq/2622/>

## Description

### FIELD

The present invention relates to an image analysis apparatus, an image analysis method, and an image analysis program.

### BACKGROUND

There is a known technology for performing image analysis, in parallel by using a plurality of Artificial Intelligence (AI) logics, on an image captured by a camera on the basis of each of the logics (see JP 6989572 B2 and JP 2010 - 211514 A).

Moreover, JP 2020 - 071665 A discloses a behavior recognition device detecting a video including a specific action based on an output result including a plurality of output labels, which can be obtained by inputting video data into a first recognition model obtaining a plurality of output labels. When the ratio of the number of output labels of a recognition object recognized as the specific action, among the plurality of output labels counted, is equal to or greater than a threshold value, the behavior recognition device switches to a second recognition model that has a smaller number of identification objects than those of the first recognition model. The document "How to use the Detection function of the Tapo&Kasa cameras | TP-Link Nederland" (13 September 2023 (2023-09-13), pages 1-20, XP093248042, Retrieved from the Internet: URL:https://www.tp-link.com/nl/support/faq/2622/) by Tapo demonstrates the configuration options of a commercially-available surveillance camera, which allow setting motion and person detection sensitivities as well as reactions that are to be triggered when detecting certain events (e.g., notifications, alarms, etc.).

However, it is difficult to execute an appropriate reaction to an occurred event when facility security or equipment management is performed. For example, a degree of importance indicating urgency or the like of the occurred event is different according to an execution entity or an execution target indicating "who", "when", "what", "what did you do", and the like, but it is difficult to separately execute a reaction by determining the urgency of the event on the basis of a combination of output results obtained from the plurality of AI logics that detect each of the events.

Accordingly, the present invention has been conceived in light of the circumstances described above and an object thereof is to enable an appropriate reaction to be executed to an occurred event by a user setting a combination condition of output results obtained from a plurality of AI logics. The invention is set out in the appended set of claims.

### BRIEF DESCRIPTION OF THE DRAWINGS

FIG. 1 is a diagram illustrating a configuration example and a process example of an occurrence event detection system according to an embodiment;
FIG. 2 is a block diagram illustrating a configuration example of each device included in the occurrence event detection system according to the embodiment;
FIG. 3 is a diagram illustrating one example of a candidate information storage unit included in a server device according to the embodiment;
FIG. 4 is a diagram illustrating one example of a setting information storage unit included in the server device according to the embodiment;
FIG. 5 is a diagram illustrating one example of an image data storage unit included in the server device according to the embodiment;
FIG. 6 is a diagram illustrating one example of an analysis model storage unit included in the server device according to the embodiment;
FIG. 7 is a diagram illustrating a first specific example of a display screen of an operator terminal according to the embodiment;
FIG. 8 is a second specific example of the display screen of the operator terminal according to the embodiment;
FIG. 9 is a flowchart illustrating one example of the overall flow of a process performed in the occurrence event detection system according to the embodiment;
FIG. 10 is a diagram illustrating a configuration example and a process example of an occurrence event detection system according to a first modification of the embodiment;
FIG. 11 is a configuration example and a process example of an occurrence event detection system according to a second modification of the embodiment; and
FIG. 12 is a diagram illustrating an example of a hardware configuration according to the embodiment.

### DETAILED DESCRIPTION OF THE PREFERRED EMBODIMENTS

Preferred embodiments of an image analysis apparatus, an image analysis method, and an image analysis program according to the present invention will be explained in detail below with reference to the accompanying drawings.

### Embodiment

In the following, a configuration and a process related to an occurrence event detection system 100 according to an embodiment, a configuration and a process related to each device included in the occurrence event detection system 100, and the flow of the process performed in the occurrence event detection system 100 will be described in this order, and, at the end, effects of the embodiment will be described.

### 1. Configuration and process related to occurrence event detection system 100

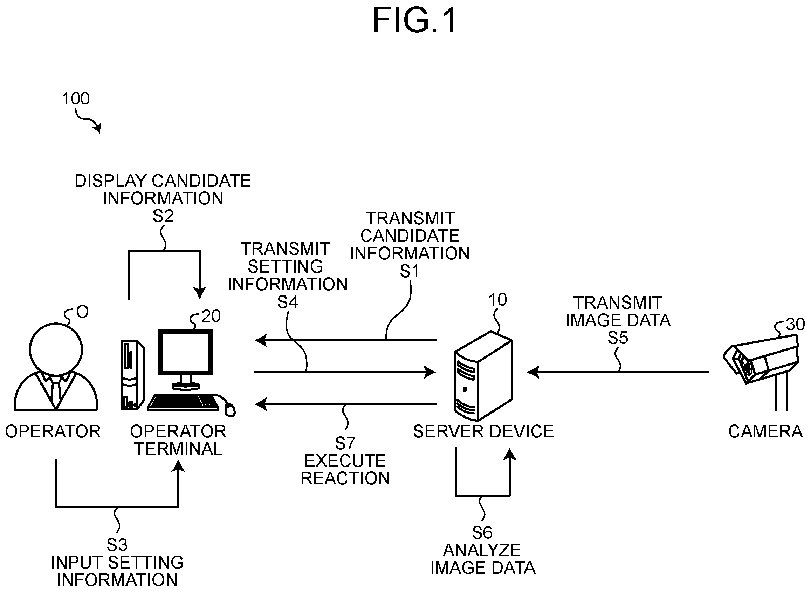

A configuration and a process related to the occurrence event detection system 100 according to the embodiment will be described in detail with reference to FIG. 1. FIG. 1 is a diagram illustrating a configuration example and a process example of the occurrence event detection system 100 according to the embodiment. In a description below, an example of the overall configuration of the occurrence event detection system 100, a process example of the occurrence event detection system 100, and the effects of the occurrence event detection system 100 will be described. Furthermore, in the embodiment, identifying a person and detecting a behavior performed at the time of facility security or equipment management will be described as one example, but the example is not intended to limit fields of application. The example may also be used for monitoring of parks, roads, rivers, and the like, and the target of behavior detection is not intended to limit persons, but may also be applicable to construction machine, robots, and animals.

### 1-1. Example of the overall configuration of occurrence event detection system 100

The occurrence event detection system 100 includes a server device 10, an operator terminal 20, and a camera 30. Here, the server device 10, the operator terminal 20, and the camera 30 are connected to one another via a predetermined communication network (not illustrated) so as to be able to communicate each other in a wired or wireless manner. Furthermore, various kinds of communication networks, such as the Internet or a dedicated line, may be used for the predetermined communication network.

### 1-1-1. Server device 10

The server device 10 is an image analysis apparatus that analyses image data acquired from the camera 30. For example, the server device 10 is implemented in a cloud environment, an on-premise environment, an edge environment, or the like. Furthermore, in the occurrence event detection system 100 illustrated in FIG. 1, two or more of the server devices 10 may be included.

### 1-1-2. Operator terminal 20

The operator terminal 20 is an administrator terminal that is used by an operator O who is an administrator of a facility or equipment. Furthermore, in the occurrence event detection system 100 illustrated in FIG. 1, two or more of the operator terminal 20 may be included.

### 1-1-3. Camera 30

The camera 30 is an image capturing device that is installed in a facility or equipment, and is, for example, a security camera, a monitoring camera, or the like. Furthermore, in the occurrence event detection system 100 illustrated in FIG. 1, two or more of the cameras 30 may be included.

### 1-2. Example of the overall process performed in occurrence event detection system 100

The overall process performed in the occurrence event detection system 100 described above will be described. Furthermore, the processes performed at Step S1 to S7 described below may be performed in different order. Moreover, some of the processes performed at Step S1 to S7 described below may be omitted.

### 1-2-1. Candidate information transmission process

At a first step, the server device 10 transmits candidate information to the operator terminal 20 (Step S1). For example, the server device 10 transmits the candidate information including identification information on an AI logic for each analysis category (hereinafter, appropriately and simply referred to as a "category") that is analyzable by the server device 10, an output value list, and the like to the operator terminal 20.

Here, the analysis category is a classification of an image analysis target (hereinafter, appropriately and simply referred to as a "target"), and is, for example, a "motion of a person" that indicates a behavior of a person included in an image, "person recognition" that indicates an attribute of a person (for example, name, belonging department, authority, gender, age, etc.) included in an image, "identification of a thing" that indicates an object that is included in an image and that is linked to a behavior exhibited by a person, and the like.

The "motion of a person" is an analysis category associated with "what did you do" corresponding to a behavior of a person indicating, for example, "entering a room", "leaving a room", "taking out", "leaving behind", "using violence", "falling down", "vomiting", "crying", or the like as the image analysis target.

Furthermore, the above described "motion of a person" is an example of a case of a behavior that is detected in a case where the target for the behavior analysis is a person. As another example other than this, in a case of a robot or a construction machine, a motion of the robot or the construction machine "grabbing", "lifting", "installing", "digging ", or the like may be used as a target. Moreover, in also a case in which an animal is a target for the behavior analysis, a motion of the animal may also be the detection target.

The "person recognition" is an analysis category associated with "who" corresponding to an attribute of a person indicating, for example, a "pre-registered person: authority A", a "pre-registered person: authority B", a "non-registered person", or the like as the image analysis target.

Moreover, the above described "person recognition" is an example of a case in which a target for the behavior analysis is a person. As another example other than this, in a case where a location in which a person and a robot operate in cooperation with each other is targeted for an image to be captured, a robot may be included, or a vehicle for work, such as a construction machine, may also be a target. Moreover, an animal may also be a target.

The "identification of a thing" is an analysis category associated with "what" corresponding to an object that is linked to a behavior of a person and that indicates, for example, a "desk", a "chair", a "cardboard box", a "locker", a "file", a "safe", a "personal seal", a "foliage plant", a "shredder", or the like as the image analysis target.

Furthermore, the AI logic mentioned here is an analysis technique that is implemented by an analysis model AM that is a trained machine learning model that outputs the image analysis targets. Moreover, the output value list mentioned here is a list of analysis items that are the image analysis targets output by each of the AI logics. Here, the output value list may be a list of shared analysis items.

### 1-2-2. Candidate information display process

At a second step, the operator terminal 20 displays the candidate information (Step S2). For example, the operator terminal 20 displays, on a monitor, a setting screen in which a list of the identification information on the AI logic for each analysis category, an output value list for each AI logic, or the like is presented as the candidate information.

### 1-2-3. Setting information input process

At a third step, the operator O inputs setting information to the operator terminal 20 (Step S3). For example, the operator O inputs, as the setting information, selection of the AI logic that is used for an analysis by selecting the identification information on an arbitrary AI logic from the list of the identification information on the AI logic for each analysis category.

At this time, as the selection of the AI logic, the operator O selects an "AI logic 1" as {analysis category example 1: motion of a person}, selects an "AI logic A" as {analysis category example 2: person recognition}, and selects an "AI logic W" as {analysis category example 3: identification of a thing}, for example.

Furthermore, as a result of the operator O selecting, for each analysis category, an analysis item that is output by the selected AI logic, and assigning the degree of importance to the combination of the selected analysis items, the operator O inputs the degree of importance that is associated with the combination of the analysis items as setting information. At this time, the operator O may also input a reaction that is executed by the server device 10 and that is associated with the degree of importance as the setting information.

Here, the degree of importance indicates a degree of urgency to responds to an event that occurs, a priority order, or a degree of severity, and is expressed by, for example, 11 levels between 0 and 10. Furthermore, the degree of importance may also be expressed by a score between 0 and 100%, a rank of A, B, or C, or the like.

At this time, the operator O assigns, as the degree of importance, a "degree of importance 8" that indicates urgency to a combination of the analysis items of, for example, {"who": "non-registered person", "when": "weekday business hours", "what": "file", and "what did you do": "taking out"}. In the same way, the operator O assigns the degree of importance to each of the combinations of the other analysis items as the event that is desired to be detected.

### 1-2-4. Setting information transmission process

At a fourth step, the operator terminal 20 transmits the setting information to the server device 10 (Step S4). For example, the operator terminal 20 transmits, to the server device 10, selection of the AI logic for each analysis category, the degree of importance associated with the combination of the analysis items, the reaction associated with the degree of importance, and the like, which are input to the operator terminal 20 by the operator O, as the setting information. At this time, the server device 10 stores therein the received setting information.

### 1-2-5. Image data transmission process

At a fifth step, the camera 30 transmits image data to the server device 10 (Step S5). For example, the camera 30 transmits, to the server device 10, the image data of a still image that has been captured every seconds in a facility in which the camera 30 is installed. At this time, the server device 10 stores therein the received image data together with the image capturing time. Furthermore, the image data may be image data of a moving image, or may be data including audio data.

### 1-2-6. Image data analysis process

At a sixth step, the server device 10 analyzes the image data (Step S6). For example, the server device 10 refers to the setting information, and analyses the image data by using the AI logic that has been selected for each analysis category by the operator O. At this time, the server device 10 inputs the image data to the analysis model AM that is associated with each of the AI logics, acquires, for each analysis category, the analysis item that is the output image analysis target, and specify the degree of importance that is associated with the combination of the acquired analysis items.

In other words, as an explanation of the above described example, the server device 10 inputs image data to an analysis model AM-A associated with the "AI logic A" as {analysis category example 2: person recognition}, and acquires the analysis item that is associated with "who". Moreover, the server device 10 specifies the image capturing time of the image data, and acquires the analysis item that is associated with "when". Moreover, the server device 10 inputs image data to an analysis model AM-W associated with the "AI logic W" as {analysis category 3: identification of a thing}, and acquires the analysis item that is associated with "what". Moreover, the server device 10 inputs image data to an analysis model AM-1 associated with the "AI logic 1" as {analysis category example 1: motion of a person}, and acquires the analysis item that is associated with "what did you do". Then, the server device 10 specifies the degree of importance that indicates the urgency and that is assigned to the combination of the analysis items of "who", "when", "what", and "what did you do".

### 1-2-7. Reaction execution process

At a seventh step, the server device 10 executes a reaction onto the operator terminal 20 (Step S7). For example, in the case where the specified degree of importance is equal to or greater than a predetermined value, the server device 10 notifies the operator terminal 20 of an alarm as a reaction. At this time, in the case where the specified degree of importance is less than the predetermined value, the server device 10 records the occurred event and the image data as a log as a reaction without notifying the operator terminal 20 of the alarm.

### 1-3. Effects of occurrence event detection system 100

In the following, problems of an occurrence event detection system 100P according to a reference technology will be described, and then effects of the occurrence event detection system 100 will be described.

### 1-3-1.Problems of occurrence event detection system 100P

An occurrence event detection system 100P-1 according to a first reference technology is a technology for tracking a fleeing vehicle by using a combination of images captured by a plurality of cameras, and simultaneously performs an analysis by a plurality of analysis servers each having a different analysis logic. In addition, an occurrence event detection system 100P-2 according to a second reference technology 2 is a technology for identifying a suspicious person by using a combination of face authentication and a behavior analysis. However, in the occurrence event detection system 100P according to the reference technology, the degrees of importance of each combination of the output results obtained from the AI logics, such as "who", "when", "what", and "what did you do" are different, which is not taken into account. For example, even in a case in which a highly confidential file has been taken out, the degree of importance is different about "who" between a person who has the authority to take out the file and a person who does not have the authority to take out the file. Moreover, even in a case where elementary school students are playing in a park, the degree of importance is different in terms of "when" between on weekdays when the students are on their way to school and on school holidays.

### 1-3-2. Outline of occurrence event detection system 100

In the occurrence event detection system 100, the following processes are performed. At a first step, the server device 10 transmits the candidate information including the identification information on the AI logic for each analysis category, and the output value list to the operator terminal 20. At a second step, the operator terminal 20 displays, on the monitor, the setting screen in which the list of identification information on the AI logic for each analysis category, the output value list for each AI logic, or the like is presented as the candidate information. At a third step, the operator O inputs, to the operator terminal 20, the selection of the AI logic that is to be used for the analysis and the degree of importance that is associated with the combination of the analysis items that is output by the AI logic as the setting information. At a fourth step, the operator terminal 20 transmits the selection of the AI logic for each analysis category and the degree of importance associated with the combination of the analysis items, and the like as the setting information to the server device 10. At a fifth step, the camera 30 transmits the image data of the still image captured every seconds in the facility in which the camera 30 is installed to the server device 10. At a sixth step, the server device 10 analyzes the image data, and specifies the degree of importance that is associated with the combination of the analysis items acquired for each analysis category. At a seventh step, in the case where the specified degree of importance is equal to or greater than a predetermined value, the server device 10 notifies the operator terminal 20 of the alarm as a reaction.

### 1-3-3. Effects of occurrence event detection system 100

The following effects are provided in the occurrence event detection system 100. As a first effect, in the occurrence event detection system 100, when facility security or equipment management is performed, it is possible to notify a person who is in charge of security of the degree of importance of the situation occurring at the site after automatically identifying the situation, which makes it possible to monitor a lot of places with small number of persons. As a second effect, the occurrence event detection system 100 is packaged in a common hardware as software, so that it is possible to perform setting in accordance with individual locations according to an installation environment after efficiently manufacturing devices corresponding to individual elements included in the system and installing the devices in the actual place. As a third effect, in the occurrence event detection system 100, it is possible to easily change the setting even in a case where the situation of the installation environment is changed.

As described above, in the occurrence event detection system 100, a user defines an appropriate reaction in accordance with an occurred event on the basis of combination conditions for the output results obtained from the AI logics that are individually generated, and then, the occurrence event detection system 100 performs an analysis based on the defined reaction and outputs the obtained results, whereby a user is able to give an appropriate reaction.

### 2. Configuration and process related to each device included in occurrence event detection system 100

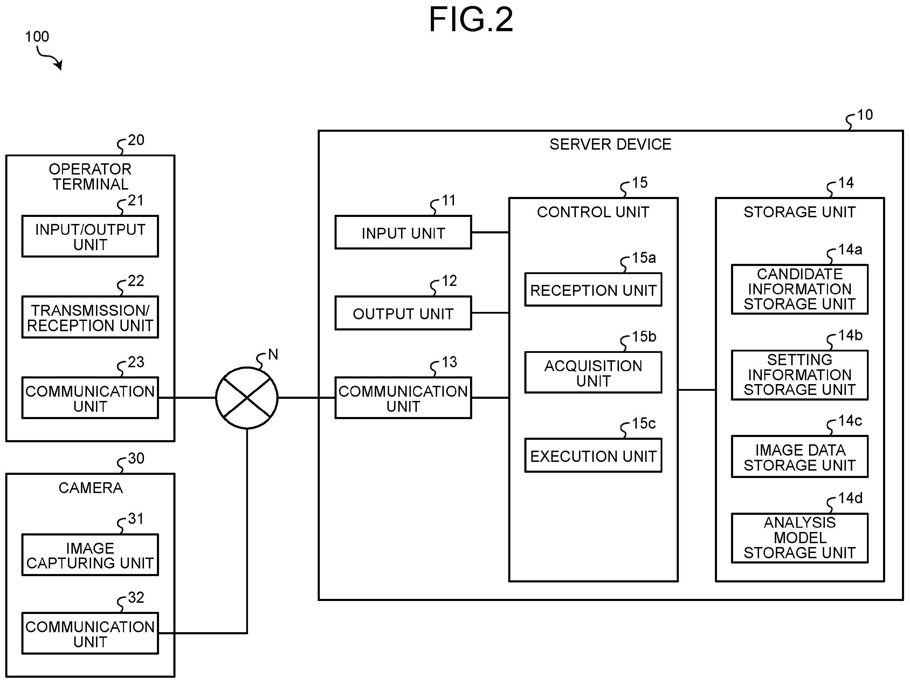

A configuration and a process related to each of the devices included in the occurrence event detection system 100 illustrated in FIG. 1 will be described with reference to FIG. 2. FIG. 2 is a block diagram illustrating a configuration example of each of the devices included in the occurrence event detection system 100 according to the embodiment. In the following, an example of the overall configuration of the occurrence event detection system 100 according to the embodiment will be described first, and then, a configuration example and a process example of the server device 10, a configuration example and a process example of the operator terminal 20, and a configuration example and a process example of the camera 30 will be described in detail.

### 2-1. Example of the overall configuration of occurrence event detection system 100

An example of the overall configuration of the occurrence event detection system 100 illustrated in FIG. 1 will be described with reference to FIG. 2. As illustrated in FIG. 2, the occurrence event detection system 100 includes the server device 10, the operator terminal 20, and the camera 30. Moreover, the server device 10, the operator terminal 20, and the camera 30 are connected to one another via a communication network N implemented by the Internet, a dedicated line, or the like so as to be able to communicate each other in a wired or wireless manner.

The server device 10 is installed in a cloud environment, an on-premise environment, an edge environment, or the like. Moreover, the operator terminal 20 is installed in a facility, a monitoring room for equipment, or the like that is managed by the operator O. Moreover, the camera 30 is installed in the facility or a monitoring site of the equipment that is being monitored.

### 2-2. Configuration example and process example of server device 10

A configuration example and a process example of the server device 10 will be described with reference to FIG. 2. The server device 10 is an image analysis apparatus, and includes an input unit 11, an output unit 12, a communication unit 13, a storage unit 14, and a control unit 15.

### 2-2-1. Input unit 11

The input unit 11 manages an input of various kinds of information with respect to the server device 10. For example, the input unit 11 is implemented by a mouse, a keyboard, or the like, and receives an input of various kinds of information to the server device 10.

### 2-2-2. Output unit 12

The output unit 12 manages an output of various kinds of information from the server device 10. For example, the output unit 12 is implemented by a display, or the like, and outputs the various kinds of information stored in the server device 10.

### 2-2-3. Communication unit 13

The communication unit 13 manages data communication with the other devices. For example, the communication unit 13 performs data communication with each of the communication devices by way of a router or the like. Moreover, the communication unit 13 is able to perform data communication with a terminal that is used by an operator (not illustrated).

### 2-2-4. Storage unit 14

The storage unit 14 stores therein various kinds of information that is referred when the control unit 15 is operated, and various kinds of information that have been acquired when the control unit 15 is operated. The storage unit 14 includes a candidate information storage unit 14a, a setting information storage unit 14b, an image data storage unit 14c, and an analysis model storage unit 14d. Here, the storage unit 14 may be implemented by, for example, a semiconductor memory device, such as a random access memory (RAM) or a flash memory, or a storage device, such as a hard disk or an optical disk. Furthermore, in the example illustrated in FIG. 2, the storage unit 14 is installed in the server device 10; however, the storage unit 14 may be installed outside the server device 10, or a plurality of storage units may be installed.

### 2-2-4-1. Candidate information storage unit 14a

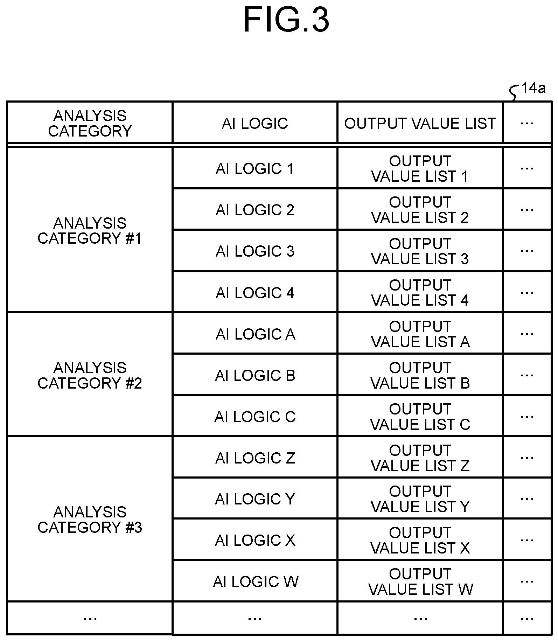

The candidate information storage unit 14a stores therein the candidate information. For example, the candidate information storage unit 14a stores therein the candidate information including the identification information on the AI logic, for each analysis category, that is analyzable by an execution unit 15c included in the control unit 15 that will be described later, an output value list, and the like. Moreover, the analysis category of the image analysis target includes, for example, at least one of an attribute of a person, a behavior of the person, and an object linked to the behavior of the person. Here, one example of the data stored in the candidate information storage unit 14a will be described with reference to FIG. 3. FIG. 3 is a diagram illustrating one example of the candidate information storage unit 14a included in the server device 10 according to the embodiment. In the example illustrated in FIG. 3, the candidate information storage unit 14a includes items of an "analysis category", an "AI logic", an "output value list", and the like.

The "analysis category" indicates the identification information for identifying a classification of the image analysis target, and is an identification number or an identification symbol of a classification of the image analysis target corresponding to, for example, a behavior of a person, an attribute of a person, an object linked to the behavior of the person, and the like. The "AI logic" indicates the identification information for identifying the AI logic that is analyzable by the server device 10, and is, for example, an identification number or an identification symbol of the AI logic. The "output value list" is a list of the analysis items corresponding to the image analysis target output by each of the AI logics, and is, for example, a list of the behaviors of the person, a list of the attributes of the person, a list of the objects linked to the behaviors of the person.

In other words, FIG. 3 illustrates an example in which the candidate information storage unit 14a stores therein data that is related to the analysis category identified by an "analysis category #1" is {AI logic: "AI logic 1", output value list: "output value list 1", and ...}, {AI logic: "AI logic 2", output value list: "output value list 2", and ...}, {AI logic: "AI logic 3", output value list: "output value list 3", and ...}, and {AI logic: "AI logic 4", output value list: "output value list 4", and ... }; data that is related to the analysis category identified by an "analysis category #2" is {AI logic: "AI logic A", output value list: "output value list A", and ...}, {AI logic: "AI logic B", output value list: "output value list B", and ...}, and {AI logic: "AI logic C", output value list: "output value list C", and ...}; data that is related to the analysis category identified by an "analysis category #3" is {AI logic: "AI logic Z", output value list: "output value list Z", and ...}, {AI logic: "AI logic Y", output value list: "output value list Y", and ...}, {AI logic: "AI logic X", output value list: "output value list X", and ...}, and {AI logic: "AI logic W", output value list: "output value list W", and ...}; and the like.

Furthermore, the candidate information storage unit 14a may also include the characteristics of the AI logics or the like as the candidate information. For example, the candidate information storage unit 14a may also store therein data indicating, as the characteristics of the AI logics, {AI logic: "AI logic 1", characteristic: "face authentication", and ...}, {AI logic: "AI logic 2", characteristic: "individual recognition based on a manner of walking", and ...}, , {AI logic: "AI logic 3", characteristic: "gender and age estimation", and ...}, {AI logic: "AI logic 4", characteristic: "clothes and accessories detection", and ... }, and the like.

### 2-2-4-2. Setting information storage unit 14b

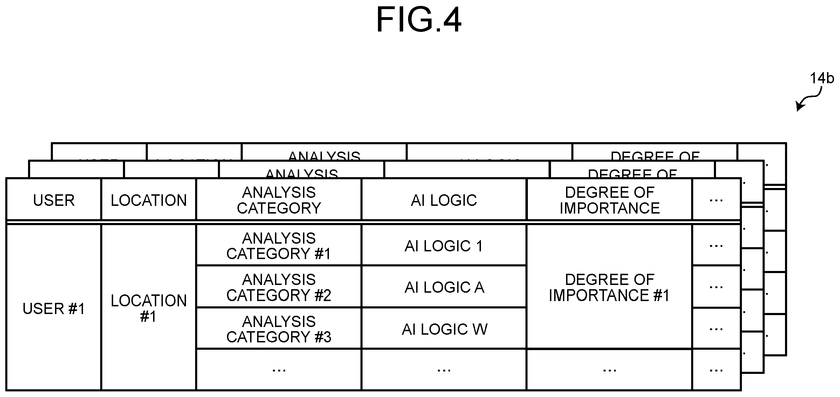

The setting information storage unit 14b stores therein the setting information. For example, the setting information storage unit 14b stores therein the setting information that is input by the operator O via the setting screen, and that includes selection of the AI logic for each analysis category accepted by an acceptance unit 15a included in the control unit 15 that will be described later, the degree of importance associated with the combination of the analysis items, and the like. In the following, one example of the data stored in the setting information storage unit 14b will be described with reference to FIG. 4. FIG. 4 is a diagram illustrating one example of the setting information storage unit 14b included in the server device 10 according to the embodiment. In the example illustrated in FIG. 4, the setting information storage unit 14b includes items of a "user", a "location", an "analysis category", an "AI logic", an "output value list", a "degree of importance information", and the like.

The "user" indicates identification information for identifying an administrator who manages a facility or equipment, and is, for example, an identification number or an identification symbol of the operator O or a management business person. The "location" indicates identification information for identifying the facility or the equipment managed by the "user", and is, for example, an identification number or an identification symbol of the facility or the equipment. The "analysis category" indicates identification information for identifying a classification of the image analysis targets, and is, for example, an identification number or an identification symbol of the classification of the image analysis targets corresponding to a behavior of a person, an attribute of the person, an object linked to the behavior of the person, or the like. The "AI logic" indicates identification information for identifying an AI logic that has been accepted by the acceptance unit 15a, and is, for example, an identification number or an identification symbol of the AI logic. The "output value list" is a list of the analysis items that are the image analysis targets output from each of the AI logics, and is, for example, a list of behaviors of a person, a list of attributes of the person, a list of objects linked to the behaviors of the person, or the like. The "degree of importance information" is a list of the degrees of importance assigned to the combinations of the analysis items that are the image analysis targets output from each of the AI logics or the like, and is, for example, a list of combinations of the analysis items of "who", "when", "what", and "what did you do", a list of the degrees of importance associated with the combinations of the analysis items, or the like.

In other words, FIG. 4 illustrates an example in which the setting information storage unit 14b stores therein data that is related to the user identified by a "user #1" and the location identified by a "location #1" is {analysis category: "analysis category #1", AI logic: "AI logic 1", and output value list: "output value list 1"}, {analysis category: "analysis category #2", AI logic: "AI logic A", and output value list: "output value list A"}, and {analysis category: "analysis category #3", AI logic: "AI logic W", and output value list: "output value list W"}; data that is related to the degree of importance information is "degree of importance information #1"; and the like.

Furthermore, the setting information storage unit 14b may also include a reaction or the like that is associated with the degree of importance as the setting information. For example, the setting information storage unit 14b may also include data {degree of importance: "0", and reaction: "event record"}, {degree of importance: "1 to 6", and reaction: "image data record" }, {degree of importance: "7 to 10", and reaction: "image data record" and "alarm notification" }, and the like as the reaction associated with the degree of importance.

### 2-2-4-3. Image data storage unit 14c

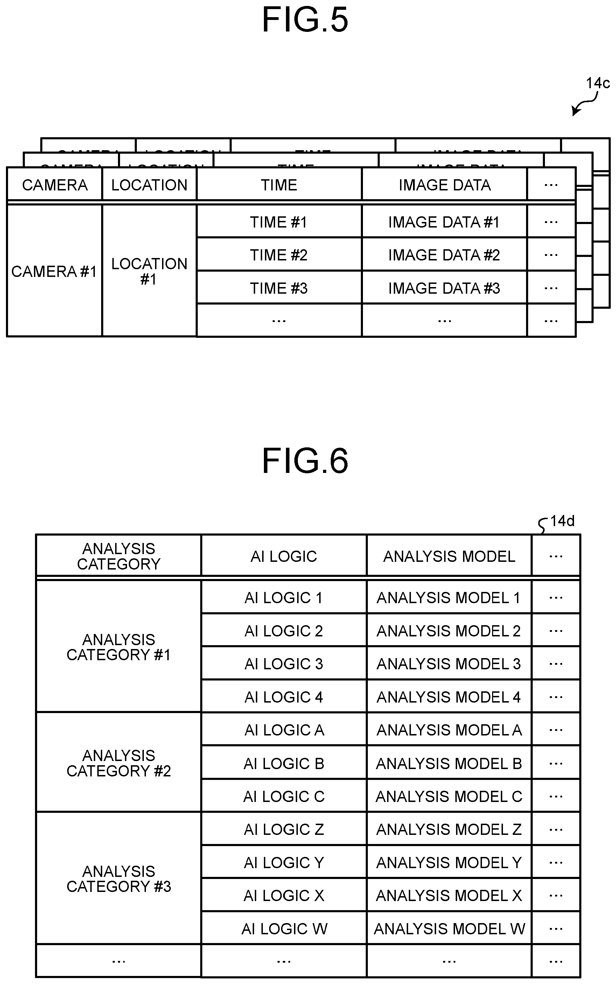

The image data storage unit 14c stores therein image data. For example, the image data storage unit 14c stores therein the image data acquired by an acquisition unit 15b included in the control unit 15 that will be described later. In the following, one example of the data stored in the image data storage unit 14c will be described with reference to FIG. 5. FIG. 5 is a diagram illustrating one example of the image data storage unit 14c included in the server device 10 according to the embodiment. In the example illustrated in FIG. 5, the image data storage unit 14c includes items of a "camera", a "location", "time", "image data", and the like.

The "camera" indicates identification information for identifying an image capturing device, and is, for example, an identification number or an identification symbol of the camera 30. The "location" indicates identification information for identifying a facility or equipment in which the image capturing device is installed, and is, for example, an identification number or an identification symbol of the facility or the equipment. The "time" indicates image capturing time, and is represented by, for example, date with a format of year, month, and day, and time with a format of hours, minutes, seconds. The "image data" indicates the image data acquired at the image capturing time, and is, for example, image data of a still image, image data of a moving image, image data of a moving image including audio data, or the like that is acquired every seconds.

In other words, FIG. 5 illustrates an example in which the image data storage unit 14c stores therein data related to the camera identified by a "camera #1" and the location identified by a "location #1" is {time: "time #1", and image data: "image data #1"}, {time: "time #2", and image data: "image data #2"}, {time: "time #3", and image data: "image data #3"}, and the like.

### 2-2-4-4. Analysis model storage unit 14d

The analysis model storage unit 14d stores therein the analysis model AM. For example, the analysis model storage unit 14d stores therein a plurality of analysis models AM that are machine learning models used by the execution unit 15c included in the control unit 15 that will be described later and that outputs the image analysis targets included in the image data. At this time, the analysis model storage unit 14d stores therein the plurality of analysis models AM for each category of the image analysis targets to be output. In the following, one example of the data stored in the analysis model storage unit 14d will be described with reference to FIG. 6. FIG. 6 is a diagram illustrating one example of the analysis model storage unit 14d included in the server device 10 according to the embodiment. In the example illustrated in FIG. 6, the analysis model storage unit 14d includes items of an "analysis category", an "AI logic", an "analysis model", and the like.

The "analysis category" indicates identification information for identifying a classification of the image analysis targets, and is, for example, an identification number or an identification symbol of a classification of the image analysis targets corresponding to a behavior of a person, an attribute of the person, an object linked to the behavior of the person, or the like. The "AI logic" is identification information for identifying an AI logic that is analyzable by the server device 10, and is, for example, an identification number or an identification symbol of the AI logic. The "analysis model" is model data on the machine learning model associated with the "AI logic", and is, for example, data including execution data for performing the algorithms for the analysis models AM of each of the AI logics, model parameters that are set values, hyperparameters, or the like.

In other words, FIG. 6 illustrates an example in which the analysis model storage unit 14d stores therein data that is related to the analysis category identified by an "analysis category #1" is {AI logic: "AI logic 1", analysis model: "analysis model 1", and ...}, {AI logic: "AI logic 2", analysis model: "analysis model 2", and ...}, {AI logic: "AI logic 3", analysis model: "analysis model 3", and ...}, and {AI logic: "AI logic 4", analysis model: "analysis model 4", and ...}; data that is related to the analysis category identified by an "analysis category #2" is {AI logic: "AI logic A", analysis model: "analysis model A", and ...}, {AI logic: "AI logic B", analysis model: "analysis model B", and ...}, and {AI logic: "AI logic C", analysis model: "analysis model C", and ...}; data that is related to the analysis category identified by an "analysis category #3" is {AI logic: "AI logic Z", analysis model: "analysis model Z", and ...}, {AI logic: "AI logic Y", analysis model: "analysis model Y", and ...}, {AI logic: "AI logic X", analysis model: "analysis model X", and ...}, and {AI logic: "AI logic W", analysis model: "analysis model W", and ... }; and the like.

### 2-2-5. Control unit 15

The control unit 15 manages the overall control of the server device 10. The control unit 15 includes the acceptance unit 15a, the acquisition unit 15b, and the execution unit 15c. Here, the control unit 15 is implemented by, for example, an electronic circuit, such as a central processing unit (CPU) or a micro processing unit (MPU), or an integrated circuit, such as an application specific integrated circuit (ASIC) or a field programmable gate array (FPGA).

### 2-2-5-1. Acceptance unit 15a

The acceptance unit 15a accepts various kinds of information. Furthermore, the acceptance unit 15a may also store the accepted various kinds of information in the storage unit 14. In a description below, a setting screen display process, an AI logic selection acceptance process, and a degree of importance information acceptance process will be described.

### Setting screen display process

The acceptance unit 15a performs the setting screen display process. For example, the acceptance unit 15a presents the list of the analysis models AM that are a plurality of machine learning models for each analysis category of the image analysis targets, and causes the user terminal that is used by the user to display an AI logic selection screen, as a setting screen, in which an input of a selection of the analysis model AM is accepted for each analysis category.

A specific example of the AI logic selection screen will be described. The acceptance unit 15a transmits the candidate information to the operator terminal 20 that is used by the operator O, and causes an input/output unit 21 included in the operator terminal 20 to display {"AI logic 1", "AI logic 2", "AI logic 3", and "AI logic 4"} related to the "analysis category #1", {"AI logic A", "AI logic B", and "AI logic C"} related to the "analysis category #2", and {"AI logic Z", "AI logic Y", "AI logic X", and "AI logic W"} related to the "analysis category #3".

Furthermore, the acceptance unit 15a causes the user terminal that is used by the user to display an output value list viewing screen as the setting screen in which a list of the image analysis targets that are output from the plurality of analysis models AM is presented.

A specific example of the output value list viewing screen will be described. The acceptance unit 15a transmits the candidate information to the operator terminal 20 that is used by the operator O, and causes the input/output unit 21 included in the operator terminal 20 to display { "analysis item 1-1", "analysis item 1-2", "analysis item 1-3", "analysis item 1-4", "analysis item 1-5", "analysis item 1-6", "analysis item 1-7", and "analysis item 1-8"} related to the "output value list 1" that is desired to be viewed by the operator O.

Furthermore, the acceptance unit 15a presents a list of the image analysis targets that are output from the analysis models AM selected for each analysis category of the image analysis targets, and causes the user terminal that is used by the user to display a degree of importance setting screen as the setting screen in which an input of a combination of image analysis targets for each analysis category and an input of the degree of importance for each of the combinations are accepted.

A specific example of the degree of importance setting screen will be described. The acceptance unit 15a transmits the candidate information to the operator terminal 20 that is used by the operator O, and causes the input/output unit 21 included in the operator terminal 20 to display { "analysis item 1-1", "analysis item 1-2", "analysis item 1-3", "analysis item 1-4", "analysis item 1-5", "analysis item 1-6", "analysis item 1-7", and "analysis item 1-8"} related to the "AI logic 1" that has been selected by the operator O; {"analysis item A-1", "analysis item A-2", and "analysis item A-3"} related to the "AI logic A" that has been selected by the operator O; { "analysis item W-1", "analysis item W-2", "analysis item W-3", "analysis item W-4", "analysis item W-5", "analysis item W-6", "analysis item W-7", "analysis item W-8", and "analysis item W-9"} related to the "AI logic W" that has been selected by the operator O; and { "analysis item T-1", "analysis item T-2", and "analysis item T-3"} related to the occurrence time of the event. Then, the acceptance unit 15a causes the input/output unit 21 included in the operator terminal 20 to display an input screen of the "degree of importance" that is associated with the combination of {"analysis item 1-3", "analysis item A-3", "analysis item W-5", and "analysis item T-1"} of the analysis items selected by the operator O.

### AI logic selection acceptance process

The acceptance unit 15a performs the AI logic selection acceptance process. For example, the acceptance unit 15a accepts, by accepting selection of the AI logic, selection of the analysis model AM received from the plurality of analysis models AM that are used for the AI logics. At this time, by accepting the selection of the AI logic for each analysis category, the acceptance unit 15a accepts the selection of the analysis model AM from among the plurality of analysis models AM that are used for the AI logics for each analysis category.

A specific example of the AI logic selection acceptance process will be described. The acceptance unit 15a accepts {analysis category: "analysis category #1", and AI logic: "AI logic 1"}, {analysis category: "analysis category #2", and AI logic: "AI logic A"}, and {analysis category: "analysis category #3", and AI logic: "AI logic W"} as the respective AI logics that are input by the operator O operating the AI logic selection screen displayed on the monitor of the operator terminal 20, and stores the input data in the setting information storage unit 14b.

### Degree of importance information acceptance process

The acceptance unit 15a performs the degree of importance information acceptance process. For example, the acceptance unit 15a accepts a degree of importance that is associated with a combination of the image analysis targets. At this time, the acceptance unit 15a accepts the degree of importance that is associated with the combination of the image analysis targets for each analysis category. Moreover, the acceptance unit 15a may also accept a reaction according to the degree of importance.

A specific example of the degree of importance information acceptance process will be described. The acceptance unit 15a accepts, as the degree of importance information that is input by the operator O operating the degree of importance setting screen displayed on the monitor of the operator terminal 20, the "degree of importance information #1", in which the degree of importance "8" is assigned to the combination of an analysis item "analysis item 1-3" that is output from the "AI logic 1" selected by the "analysis category #1", an analysis item "analysis item A-3" that is output from the "AI logic A" selected by the "analysis category #2", an analysis item "analysis item W-5" that is output from the "AI logic W" selected by the "analysis category #3", and an analysis item "analysis item T-1" indicating the occurrence time of the event, and the like, and stores the accepted information in the setting information storage unit 14b. At this time, in addition to the combination of the analysis items and the degree of importance, the acceptance unit 15a may accept, as the "degree of importance information #1", a reaction of {degree of importance: "0", and reaction: "event record" }, a reaction of {degree of importance: "1 to 6", and reaction: "image data record"}, a reaction of { degree of importance: "7 to 10", and reaction: "image data record" and "alarm notification" }, and the like that are associated with the degree of importance input by the operator O and that are executed by the execution unit 15c, and may store the accepted information in the setting information storage unit 14b.

### 2-2-5-2. Acquisition unit 15b

The acquisition unit 15b acquires various kinds of information. Furthermore, the acquisition unit 15b may also store the acquired various kinds of information in the storage unit 14. For example, the acquisition unit 15b acquires image data. At this time, the acquisition unit 15b acquires the image data that has been captured by and transmitted from the camera 30 that is an image capturing device and that is installed in the facility that is managed by the operator O who is the user.

A specific example will be described. The acquisition unit 15b acquires image data of {time: "time #1", and image data: "image data #1"}, {time: "time #2", and image data: "image data #2"}, {time: "time #3", and image data: "image data #3"}, and the like as the image data that has been captured by and transmitted from the camera 30, and stores the acquired image data in the image data storage unit 14c.

### 2-2-5-3. Execution unit 15c

The execution unit 15c performs various kinds of processes. Furthermore, the execution unit 15c may acquire the various kinds of information from the storage unit 14. In the following, the degree of importance specifying process and the reaction execution process will be described.

### Degree of importance specifying process

The execution unit 15c performs the degree of importance specifying process. For example, the execution unit 15c inputs the image data acquired by the acquisition unit 15b to the analysis model AM for which selection has been accepted, and specifies the degree of importance that is associated with the output combination of the image analysis targets. Moreover, the execution unit 15c inputs the image data acquired by the acquisition unit 15b to the analysis model AM for which for which selection has been accepted for each analysis category, and specifies the degree of importance that is associated with the output combination of the image analysis targets for each analysis category.

A specific example of the degree of importance specifying process will be described. The execution unit 15c inputs the image data of {time: "time #1", and image data: "image data #1"} to the "analysis model 1" that is used by the "AI logic 1", and acquires the analysis item "analysis item 1-3" that is an output result. Moreover, the execution unit 15c inputs the image data of {time: "time #1", and image data: "image data #1"} to the "analysis model A" that is used by the "AI logic A", and acquires the analysis item "analysis item A-3" that is an output result. Moreover, the execution unit 15c inputs the image data of {time: "time #1", and image data: "image data #1"} to the "analysis model W" that is used by the "AI logic W", and acquires the analysis item "analysis item W-5" that is an output result. Furthermore, the execution unit 15c acquires the analysis item "analysis item T-1" that indicates the occurrence time of the event that is specified by the image data {time: "time #1", and image data: "image data #1"}. Then, the execution unit 15c refers to the setting information storage unit 14b, acquires {AI logic 1: "analysis item 1-3", AI logic A: "analysis item A-3", AI logic W: "analysis item W-5", occurrence time: "analysis item T-1", and degree of importance: "8"}, and specifies that the degree of importance of the occurred event is "8" .

### Reaction execution process

The execution unit 15c performs the reaction execution process. For example, the execution unit 15c executes a predetermined reaction in accordance with the degree of importance associated with the output combination of the image analysis targets. Moreover, the execution unit 15c executes the predetermined reaction in accordance with the degree of importance associated with the output combination of the image analysis targets for each analysis category. At this time, the execution unit 15c performs at least one of processes of notifying the operator O of an alarm, recording the image data, and recording the output image analysis targets in accordance with the degree of importance as the predetermined reaction that has been set by the operator O who is the user.

A specific example of the reaction execution process will be described. In a case where the execution unit 15c has specified that the degree of importance of the occurred event is "8", the execution unit 15c refers to the setting information storage unit 14b, acquires the reaction of {degree of importance: "0", and reaction: "event record"}, the reaction of {degree of importance: "1 to 6", and reaction: "image data record"}, and the reaction of {degree of importance: "7 to 10", and reaction: "image data record" and "alarm notification" }; records the image data obtained at the occurrence time of the events as the reactions; and notifies the operator terminal 20 of an alarm for notifying the occurrence of the events.

### 2-3. Configuration example and process example of operator terminal 20

A configuration example and a process example of the operator terminal 20 will be described again with reference to FIG. 2. The operator terminal 20 is a posting device and a viewing device, and includes an input/output unit 21, a transmission/reception unit 22, and a communication unit 23.

### 2-3-1. Input/output unit 21

The input/output unit 21 manages an input of various kinds of information with respect to the operator terminal 20. For example, the input/output unit 21 is implemented by a mouse, a keyboard, a touch panel, or the like, and receives an input of the setting information and the like to the operator terminal 20. Moreover, the input/output unit 21 manages display of various kinds of information received from the operator terminal 20. For example, the input/output unit 21 is implemented by a display or the like, and displays the setting information and the like that is stored in the operator terminal 20.

Furthermore, the input/output unit 21 displays the candidate information transmitted from the server device 10 that is an image analysis apparatus. For example, the input/output unit 21 displays an AI logic selection screen, an output value list viewing screen, a degree of importance setting screen, and the like as the setting screen on the basis of the candidate information. Furthermore, the AI logic selection screen will be described in detail later in the section of (2-3-4. First specific example of display screen of operator terminal 20). Moreover, the degree of importance setting screen will be described in detail later in the section of (2-3-5. Second specific example of display screen of operator terminal 20).

### 2-3-2. Transmission/reception unit 22

The transmission/reception unit 22 transmits various kinds of information. For example, the transmission/reception unit 22 transmits the setting information that has been input by the operator O to the server device 10 via the setting screen.

The transmission/reception unit 22 receives various kinds of information. For example, the transmission/reception unit 22 receives the candidate information transmitted from the server device 10. Moreover, the transmission/reception unit 22 receives the alarm transmitted from the server device 10.

### 2-3-3. Communication unit 23

The communication unit 23 manages data communication with the other devices. For example, the communication unit 23 performs data communication with each of the communication devices by way of a router or the like. Moreover, the communication unit 23 is able to perform data communication with a terminal that is used by an operator (not illustrated).

### 2-3-4. First specific example of display screen of operator terminal 20

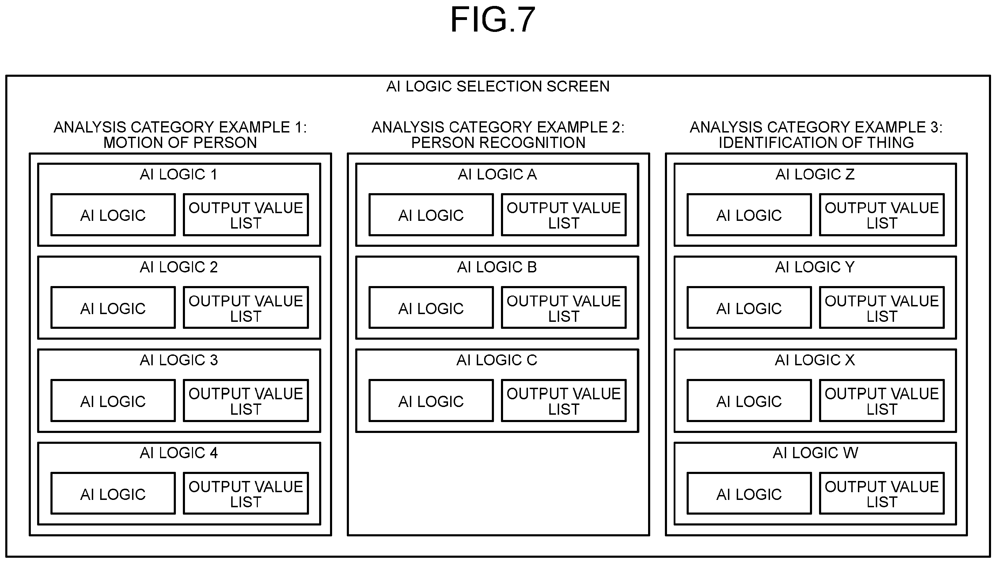

In the following, a first specific example of the display screen that is output by the input/output unit 21 included in the operator terminal 20 will be described with reference to FIG. 7. FIG. 7 is a diagram illustrating the first specific example of the display screen of the operator terminal 20 according to the embodiment. In a description below, an "AI logic selection screen", a "motion of a person", "person recognition", "identification of a thing", an "AI logic characteristic viewing screen", and an "output value list viewing screen" will be described.

### 2-3-4-1. AI logic selection screen

As indicated by the example illustrated in FIG. 7, the operator terminal 20 displays the "AI logic selection screen" that is the setting screen in which an input of a selection of AI logic (i.e., the analysis model AM) for each analysis category is accepted. Here, the operator O is able to input selection of the AI logic for each analysis category by performing a click operation on the AI logics that are displayed in each of the items of the "analysis category example 1: motion of a person", the "analysis category example 2: person recognition", and the "analysis category example 3: identification of a thing". Furthermore, in the example illustrated in FIG. 7, the operator terminal 20 displays each of the AI logics that are related to the three analysis categories of the "analysis category example 1: motion of a person", the "analysis category example 2: person recognition", and the "analysis category example 3: identification of a thing" such that each of the AI logics is able to be selected, but the analysis categories displayed by the operator terminal 20 are not limited to the example described above.

### 2-3-4-2. Motion of person

As indicated by the example illustrated in FIG. 7, the operator terminal 20 displays a "motion of a person" that indicates a behavior of a person as one of the analysis categories. In the example illustrated in FIG. 7, the "AI logic 1", the "AI logic 2", the "AI logic 3", and the "AI logic 4" are displayed as the AI logics each of which outputs a "motion of a person". Here, the AI logic that outputs the "motion of a person" is an analysis technique for implementing, for example, motion estimation, skeleton estimation, violent behavior detection, falling detection, person tracking, or the like by inputting the image data, but the analysis technique for outputting the "motion of a person" is not limited to the example described above. Moreover, in addition to a person, a target for a behavior analysis may also be a robot, a vehicle for a work, such as a construction machine, an animal, or the like, and a motion performed by each of the targets may also be a target.

### 2-3-4-3. Person recognition

As indicated by the example illustrated in FIG. 7, the operator terminal 20 displays the "person recognition" that indicates an attribute of a person as one of the analysis categories. In the example illustrated in FIG. 7, the "AI logic A", the "AI logic B", and the "AI logic C" are displayed as the AI logics each of which outputs the "person recognition". Here, the AI logic that outputs the "person recognition" is the analysis technique for implementing, for example, face authentication, individual recognition based on a manner of walking, gender and age estimation, clothes and accessories detection, detection of a person requiring assistance, or the like by inputting the image data, but the analysis technique for outputting the "person recognition" is not limited to the example described above.

Furthermore, the "person recognition" is one example of the AI logic that recognizes a subject, and it is possible to use an AI logic that outputs "animal recognition" for recognizing an animal, "working machine recognition" for recognizing a vehicle for a work, such as a robot or a construction machine, "natural object recognition" for recognizing a natural object, such as a flow of a river or a falling rock, and the like.

### 2-3-4-4. Identification of thing

As indicated by the example illustrated in FIG. 7, the operator terminal 20 displays "identification of a thing" that indicates an object linked to a behavior of a person as one of the analysis categories. In the example illustrated in FIG. 7, the "AI logic Z", the "AI logic Y", the "AI logic X", and the "AI logic W" are displayed as the AI logics each of which outputs the "identification of a thing". Here, the AI logic that outputs the "identification of a thing" is an analysis technique for implementing, for example, object type recognition, vehicle detection, animal recognition, plant recognition, hazardous material detection, or the like obtained by inputting image data, but the analysis technique for outputting the "identification of a thing" is not limited to the above described example.

Furthermore, the "identification of a thing" is one example of the AI logic that identifies an object, and it is also possible to use the AI logic that outputs the above described "person recognition".

### 2-3-4-5. AI logic characteristic viewing screen

The operator terminal 20 is also able to display the "AI logic characteristic viewing screen" that is a setting screen in which the characteristic of the AI logic is presented in order to support an input of the AI logic selected by the operator O. For example, in a case where the operator O performs a click operation on a button of the "AI logic" included in the "AI logic 1" associated with the "analysis category example 1: motion of a person", the operator terminal 20 displays information on "face authentication" or the like that is the characteristic of the " AI logic 1".

### 2-3-4-6. Output value list viewing screen

The operator terminal 20 is also able to display the "output value list viewing screen" that is the setting screen in which the list of the analysis items output by the AI logic is presented in order to support an input of the AI logic selected by the operator O. For example, in a case where the operator O performs a click operation on a button of the "output value list" included in the "AI logic 1" associated with the "analysis category example 1: motion of a person", the operator terminal 20 displays information indicating "entering a room", "leaving a room", "taking out", "leaving behind", "using violence", "falling down", "vomiting", "crying", and the like as the list of the analysis items output by the "AI logic 1".

### 2-3-5. Second specific example of display screen of operator terminal 20

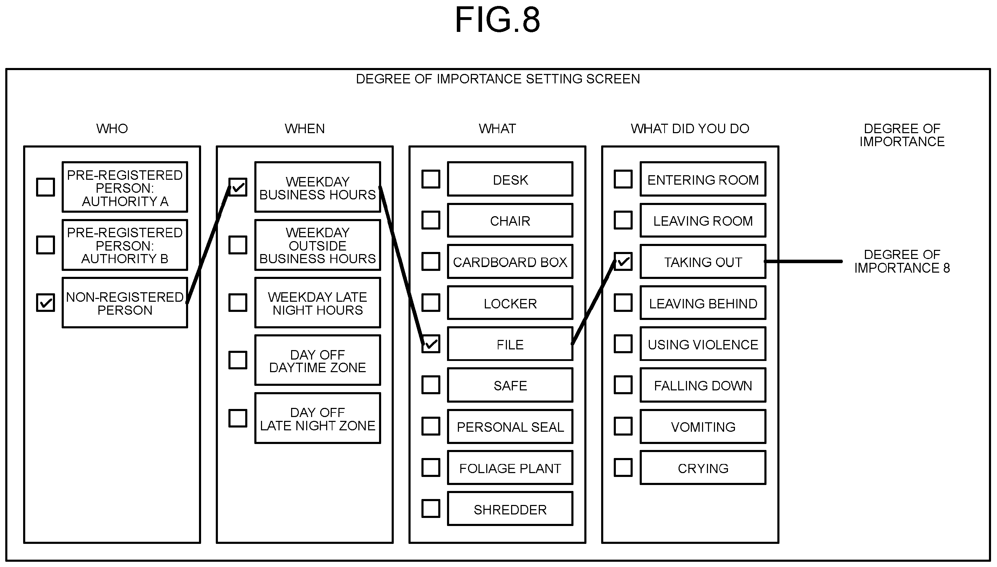

In the following, a second specific example of the display screen that is output by the input/output unit 21 included in the operator terminal 20 will be described with reference to FIG. 8. FIG. 8 is a diagram illustrating the second specific example of the display screen output by the operator terminal 20 according to the embodiment. In a description below, a "degree of importance setting screen", "person recognition", "occurrence time", "identification of a thing", a "motion of a person", a "degree of importance", and a "reaction" will be described.

### 2-3-5-1. Degree of importance setting screen

As indicated by the example illustrated in FIG. 8, the operator terminal 20 displays the "degree of importance setting screen" that is a setting screen that accepts the degree of importance that is associated with a combination (i.e., an event that will occur) of the analysis items for each analysis category. Here, the operator O is able to input the combination of the analysis items for each analysis category by performing a click operation on a checkbox of the analysis item that is displayed on each of the items of "who", "when", "what", and "what did you do". Moreover, the operator O is able to input the "degree of importance" that indicates urgency or the like associated with the combination of the analysis items for each analysis category. Moreover, the operator O is able to input a "reaction" of alarm notification or the like associated with the degree of importance.

### 2-3-5-2. Person recognition

As indicated by the example illustrated in FIG. 8, the operator terminal 20 displays "who" that is associated with the above described "analysis category example 2: person recognition" as one of the analysis category. In the example illustrated in FIG. 8, "pre-registered person: authority A", "pre-registered person: authority B", and "non-registered person" are displayed as the analysis items that are output by the AI logics included in the "person recognition" selected by the operator O on the above described "AI logic selection screen". Moreover, the "non-registered person" is selected by an operation performed by the operator O. Furthermore, the analysis items that are output by the AI logics included in the "person recognition" are not limited to the example described above.

At this time, the analysis item that is output by the AI logic included in the "person recognition" may be an analysis item that is directly output by the analysis model AM, or may be an analysis item that is output after an output analysis item has been converted. For example, the analysis model AM may directly output, in accordance with an input of the image data, one of the analysis items among the "pre-registered person: authority A", the "pre-registered person: authority B", and the "non-registered person", or, the analysis model AM may convert an analysis item to one of the analysis items among the "pre-registered person: authority A", the "pre-registered person: authority B", and the "non-registered person" associated with a personal name that is output on the basis of the face authentication in response to an input of the image data, and then output the converted analysis item.

### 2-3-5-3. Occurrence time

As indicated by the example illustrated in FIG. 8, the operator terminal 20 displays "when" that is associated with the occurrence time of an event as one of the analysis categories. In the example illustrated in FIG. 8, "weekday business hours", "weekday outside business hours", "weekday late night hours", "day off daytime zone", and "day off late night zone" are displayed as the analysis items that are able to be specified from the image capturing time of the image data. Moreover, the "weekday business hours" is being selected by an operation performed by the operator O. Furthermore, the analysis items that are able to be specified from the image capturing time of the image data are not limited to the example described above.

At this time, the analysis items that are able to be specified from the image capturing time of the image data as the occurrence time of the event may be the analysis items that are classified by the server device 10 on the basis of a work schedule at a company registered in advance, school day schedule, and the like, or the analysis items that are output on the basis of a day of the week, time of day, and the like that are set by the operator O. Moreover, the analysis item of the occurrence time of an event may be the analysis item that is output on the basis of the analysis model AM that directly outputs the analysis item in accordance with an input of the image data.

### 2-3-5-4. Identification of a thing

As indicated by the example illustrated in FIG. 8, the operator terminal 20 displays "what" that is associated with the above described "analysis category example 3: identification of a thing" as one of the analysis categories. In the example illustrated in FIG. 8, a "desk", a "chair", a "cardboard box", a "locker", a "file", a "safe", a "personal seal", a "foliage plant", and a "shredder" are displayed as the analysis items that are output by the AI logics included in the "identification of a thing" selected by the operator O on the above described "AI logic selection screen". Moreover, the "file" is being selected by an operation performed by the operator O. Furthermore, the analysis items that are output by the AI logics included in the "identification of a thing" are not limited to the example described above.

At this time, the analysis item that is output by the AI logics included in the "identification of a thing" may be an analysis item that is directly output by the analysis model AM, or may be an analysis item that is output after an output analysis item has been converted. Moreover, in a case where a target object associated with the "motion of a person" is not present, the operator O may skip the selection of the "identification of a thing".

### 2-3-5-5. Motion of a person

As indicated by the example illustrated in FIG. 8, the operator terminal 20 displays "what did you do" that is associated with the above described "analysis category example 1: motion of a person" as one of the analysis categories. In the example illustrated in FIG. 8, "entering a room", "leaving a room", "taking out", "leaving behind", "using violence", "falling down", "vomiting", and "crying" are displayed as the analysis items that are output from the AI logics included in the "motion of a person" selected by the operator O on the above described "AI logic selection screen". Moreover, "taking out" is being selected by an operation performed by the operator O. Furthermore, the analysis items that are output by the AI logics included in the "motion of a person" are not limited by the above described example.

At this time, the analysis item that is output by the AI logic included in the "motion of a person" may be an analysis item that is directly output by the analysis model AM, or may be an analysis item that is output after an output analysis item has been converted.

### 2-3-5-6. Degree of importance

As indicated by the example illustrated in FIG. 8, the operator terminal 20 is able to input the "degree of importance" that indicates urgency or the like associated with a combination of the analysis items for each analysis category. In the example illustrated in FIG. 8, the "degree of importance 8" (the minimum value 0, and the maximum value 10) is input to the combination of the analysis items of {who: "non-registered person", when: "weekday business hours", what: "file", and what did you do: "taking out"} selected by the operator O. Furthermore, an input format of the "degree of importance" is not limited to the above described example, but the "degree of importance" may be indicated by using a score between 0 and 100%, a rank of A, B, or C, or the like.

### 2-3-5-7. Reaction

The operator terminal 20 is able to input a "reaction", such as alarm notification, that is associated with the "degree of importance". For example, it may be possible to input a reaction of {degree of importance: "0", reaction: "event record"}, a reaction of {degree of importance: "1 to 6", reaction: "image data record"}, a reaction of {degree of importance: "7 to 10", reaction: "image data record" and "alarm notification"}, or the like as the reaction executed by the server device 1.

### 2-4. Configuration example and process example of camera 30

A configuration example and a process example of the camera 30 will be described with reference to FIG. 2 again. For example, the camera 30 is implemented by a security camera, a monitoring camera, or the like that is installed in the facility managed by the operator O, and includes an image capturing unit 31 and a communication unit 32.

### 2-4-1. Image capturing unit 31

The image capturing unit 31 generates image data. For example, the image capturing unit 31 captures an image of the inside of the facility every seconds, and generates image data of a still image. Moreover, the image capturing unit 31 captures an image of the inside of the facility, and generates image data of a moving image. At this time, the image capturing unit 31 may record the inside of the facility, and generate audio data.

The image capturing unit 31 transmits the generated image data to the server device 10. For example, the image capturing unit 31 transmits the generated image data of the still image to the server device 10. Moreover, the image capturing unit 31 transmits the generated image data of the moving image to the server device 10. At this time, the image capturing unit 31 may transmit the generated audio data to the server device 10.

### 2-4-2. Communication unit 32

The communication unit 32 manages data communication with the other devices. For example, the communication unit 32 performs data communication with each of the communication devices by way of a router or the like. Moreover, the communication unit 32 is able to perform data communication with a terminal that is used by an operator (not illustrated).

### 3. Flow of each process performed in occurrence event detection system 100

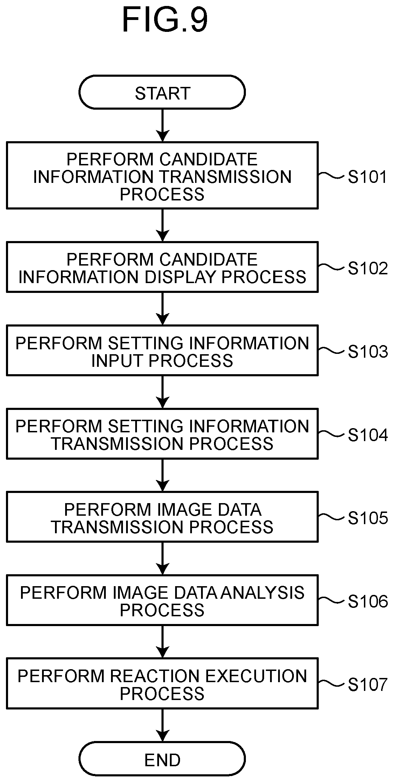

The flow of each of the processes performed in the occurrence event detection system 100 according to the embodiment will be described with reference to FIG. 9. Furthermore, the processes at Steps S101 to S107 described below may be performed in different order. Moreover, some of the processes performed at Steps S101 to S107 described below may be omitted.

### 3-1. Candidate information transmission process

At a first step, the server device 10 performs a candidate information transmission process (Step S101). For example, the server device 10 transmits the identification information on the AI logic for each analysis category that is analyzable by the server device 10, the candidate information including the output value list, and the like to the operator terminal 20.

### 3-2. Candidate information display process

At a second step, the operator terminal 20 performs a candidate information display process (Step S102). For example, the operator terminal 20 displays, on the monitor, as the candidate information, the setting screen in which the list of the identification information on the AI logic for each analysis category, an output value list for each AI logic, or the like is presented.

### 3-3. Setting information input process

At a third step, the operator O performs a setting information input process (Step S103). For example, the operator O inputs, as the setting information, selection of the AI logic that is used for an analysis by selecting an AI logic from the list of the identification information on the AI logic for each analysis category; selects, for each analysis category, the analysis item that is output by the selected AI logic; and inputs, by assigning the degree of importance to the combination of the selected analysis item, the degree of importance associated with the combination of the analysis items as the setting information.

### 3-4. Setting information transmission process

At a fourth step, the operator terminal 20 performs a setting information transmission process (Step S104). For example, the operator terminal 20 transmits, as the setting information, selection of the AI logic for each analysis category, the degree of importance that is associated with the combination of the analysis items, and the like that are input to the operator terminal 20 by the operator O to the server device 10.

### 3-5. Candidate information display process

At a fifth step, the camera 30 performs an image data transmission process (Step S105). For example, the camera 30 transmits the image data of the still image that has been captured every seconds in the facility in which the camera 30 is installed to the server device 10.

### 3-6. Image data analysis process

At a sixth step, the server device 10 performs an image data analysis process (Step S106). For example, the server device 10 refers to the setting information, analyzes the image data by using the AI logic selected by the operator O for each analysis category, and specifies the degree of importance that is associated with the combination of the analysis items corresponding to an analysis result.

### 3-7. Reaction execution process

At a seventh step, the server device 10 performs a reaction execution process (Step S107). For example, in a case where the specified degree of importance is equal to or greater than the predetermined value, the server device 10 notifies the operator terminal 20 of an alarm as a reaction.

### 4. Effects of embodiment

Lastly, the effects of the embodiment will be described. In the following, a first to an eight effects associated with the process according to the embodiment will be described.

### 4-1. First Effect

As the first effect, in the process according to the above described embodiment, the server device 10 stores a plurality of analysis models AM each of which outputs image analysis targets included in the image data, accepts selection of an analysis model AM from among the plurality of analysis models AM and also accepts the degree of importance that is associated with a combination of the image analysis targets, acquires the image data, inputs the acquired image data to the analysis model AM for which the selection has been accepted, and performs a predetermined reaction on the degree of importance that is associated with the output combination of the image analysis targets. As a result of this, in this process, it is possible to execute an appropriate reaction to the occurred event.

### 4-2. Second Effect

As the second effect, in the process according to the above described embodiment, the server device 10 stores therein the plurality of analysis models AM for each analysis category of the image analysis targets to be output, accepts the selection of the analysis model AM from among the plurality of analysis models AM for each of the analysis categories and also accepts the degree of importance that is associated with the combination of the image analysis targets for each of the analysis categories, inputs the acquired image data to the analysis model AM for which the selection has been accepted for each of the analysis categories, and executes the predetermined reaction in accordance with the degree of importance that is associated with the output combination of the image analysis targets for each of the analysis categories. As a result of this, in this process, the degree of importance is able to be set in detail for each event that occurs; therefore, it is possible to execute an appropriate reaction to the occurred event.

### 4-3. Third Effect

As the third effect, in the process according to the above described embodiment, the server device 10 presents a list of the plurality of analysis models AM for each analysis category of the image analysis targets, and causes the operator terminal 20 that is used by the operator O to display the setting screen in which an input of the selection of the analysis model AM is accepted for each of the analysis categories. As a result of this, in this process, it is possible to execute an appropriate reaction to the occurred event by selecting the AI logic that is used by the operator O for each of the analysis categories.

### 4-4. Fourth Effect

As the fourth effect, in the process according to the above described embodiment, the server device 10 presents the list of the plurality of analysis models AM for each analysis category of the image analysis targets, and causes the operator terminal 20 that is used by the operator O to display the setting screen in which the list of the image analysis targets output by each of the plurality of analysis models AM is presented. As a result of this, in this process, it is possible to execute an appropriate reaction to the occurred event by providing information needed at the time of selection of the AI logic used by the operator O.

### 4-5. Fifth Effect

As the fifth effect, in the process according to the above described embodiment, the server device 10 presents the list of the image analysis targets output by the analysis model AM for which the selection has been accepted for each analysis category of the image analysis targets, and causes the operator terminal 20 that is used by the operator O to display the setting screen in which an input of the combination of the image analysis targets for each of the analysis categories and an input of the degree of importance for each of the combinations. As a result of this, in this process, it is possible to execute an appropriate reaction to the occurred event by providing a setting screen that is used when the operator O sets the degree of importance.

### 4-6. Sixth Effect

As the sixth effect, in the process according to the above described embodiment, the server device 10 acquires the image data that has been captured and transmitted by the camera 30 that is installed in the facility that is managed by the operator O. In this process, it is possible to execute an appropriate reaction to the occurred event by analyzing the image data on the facility managed by the operator O in real time.

### 4-7. Seventh Effect

As the seventh effect, in the process according to the above described embodiment, the server device 10 performs at least one of processes of notifying the operator O of an alarm, recording the image data, and recording the output image analysis targets, in accordance with the degree of importance, as a reaction that is set by the operator O. In this process, it is possible to execute an appropriate reaction to the occurred event by flexibly changing the reaction in accordance with the occurred event.

### 4-8. Eighth Effect

As the eighth effect, in the process according to the above described embodiment, the analysis category of the image analysis targets includes at least one of an attribute of a person, a behavior of the person, and an object linked to the behavior of the person. In this process, it is possible to execute an appropriate reaction to the occurred event by flexibly changing the reaction in accordance with "who", "what", and "what did you do" related to the occurred event.

### First modification of embodiment

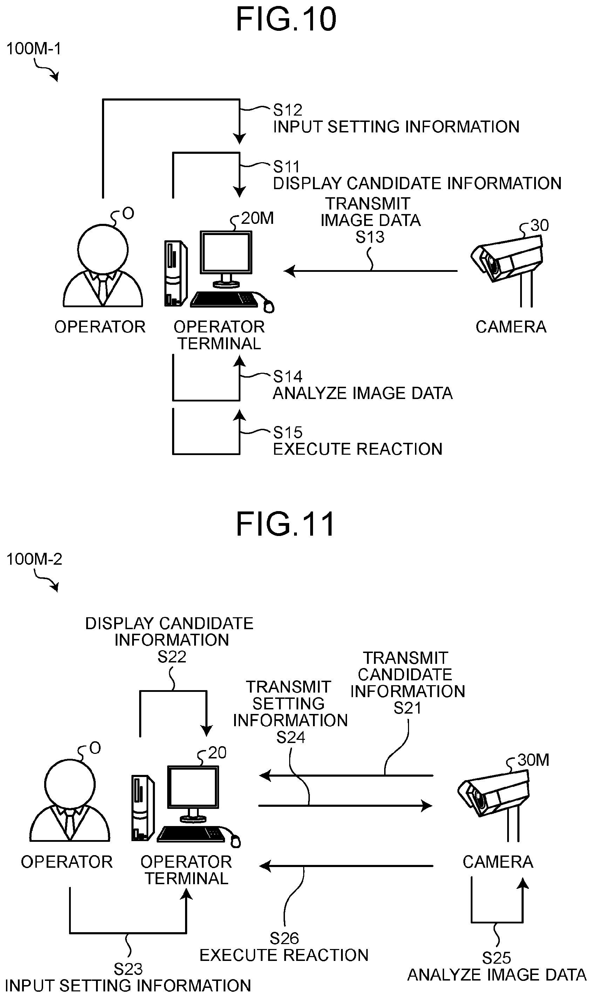

A configuration and a process related to an occurrence event detection system 100M-1 according to a first modification of the embodiment will be described with reference to FIG. 10. Furthermore, descriptions of the configuration and the processes that are common to those described above in the embodiment will be omitted.

As illustrated in FIG. 10, the occurrence event detection system 100M-1 includes an operator terminal 20M and the camera 30.

In the occurrence event detection system 100M-1, the following processes are performed. At a first step, the operator terminal 20M displays candidate information (Step S11). At a second step, the operator O inputs setting information to the operator terminal 20M (Step S12). At a third step, the camera 30 transmits image data to the operator terminal 20M (Step S13). At a fourth step, the operator terminal 20M analyzes the image data (Step S14). At a fifth step, the operator terminal 20M executes a reaction (Step S15).

As described above, in the occurrence event detection system 100M-1 according to the first modification of the embodiment, the operator terminal 20M performs an image analysis process and a reaction execution process without using the server device 10, so that it is possible to execute an appropriate reaction to the occurred event.

### Second modification of embodiment

A configuration and a process related to an occurrence event detection system 100M-2 according to a second modification of the embodiment will be described with reference to FIG. 11. Furthermore, descriptions of the configuration and the processes that are the same as those described above in the embodiment will be omitted.

As illustrated in FIG. 11, the occurrence event detection system 100M-2 includes the operator terminal 20 and a camera 30M.

In the occurrence event detection system 100M-2, the following processes are performed. At a first step, the camera 30M transmits candidate information to the operator terminal 20 (Step S21). At a second step, the operator terminal 20 displays candidate information (Step S22). At a third step, the operator O inputs setting information to the operator terminal 20 (Step S23). At a fourth step, the operator terminal 20 transmits the setting information to the camera 30M (Step S24). At a fifth step, the camera 30M analyzes the image data (Step S25). At a sixth step, the camera 30M executes a reaction to the operator terminal 20 (Step S26).

As described above, in the occurrence event detection system 100M-2 according to the second modification of the embodiment, the camera 30M performs the candidate information transmission process, the image analysis process, and the reaction execution process without using the server device 10, so that it is possible to execute an appropriate reaction to the occurred event.

### System

The flow of the processes, the control procedures, the specific names, and the information containing various kinds of data or parameters indicated in the above specification and drawings can be arbitrarily changed unless otherwise stated.

Furthermore, the components of each unit illustrated in the drawings are only for conceptually illustrating the functions thereof and are not always physically configured as illustrated in the drawings. In other words, the specific shape of a separate or integrated device is not limited to the drawings. Specifically, all or part of the device can be configured by functionally or physically separating or integrating any of the units depending on various loads or use conditions.

Furthermore, all or any part of each of the processing functions performed by each of the devices can be implemented by a CPU and by programs analyzed and executed by the CPU or implemented as hardware by wired logic.

### Hardware

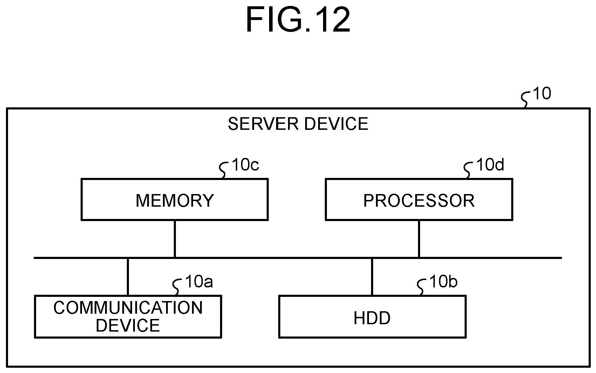

In the following, an example of a hardware configuration of the server device 10 that is an image analysis apparatus will be described. Furthermore, the other devices may also have a similar hardware configuration. FIG. 12 is a diagram illustrating an example of a hardware configuration according to the embodiment. As illustrated in FIG. 12, the server device 10 includes a communication device 10a, a hard disk drive (HDD) 10b, a memory 10c, and a processor 10d. Moreover, each of the units illustrated in FIG. 12 is connected by a bus or the like with each other.

The communication device 10a is a network interface card or the like, and performs communication with another server. The HDD 10b stores therein a database and a program that causes the functions illustrated in FIG. 2 to operate.

The processor 10d operates the process that executes each of the functions described above in FIG. 2 or the like by reading the program that executes the same processes as those performed by each of the processing units illustrated in FIG. 2 from the HDD 10b or the like and loading the read program in the memory 10c. For example, the process executes the same functions as those performed by each of the processing units included in the server device 10. Specifically, the processor 10d reads, from the HDD 10b or the like, the program having the same functions as those performed by the acceptance unit 15a, the acquisition unit 15b, the execution unit 15c, and the like. Then, the processor 10d executes the same processes as those performed by the acceptance unit 15a, the acquisition unit 15b, the execution unit 15c, and the like.

In this way, the server device 10 operates as a device that executes various processing methods by reading and executing the program. Furthermore, the server device 10 is also able to implement the same functions as those described above in the embodiment by reading the above described program from a recording medium by a medium reading device and executing the read program. In addition, the program described in this embodiment need not always be executed by the server device 10. For example, the present invention may also be similarly applied to a case in which another computer or another server executes the program or in a case in which another computer and another server cooperatively execute the program with each other.

The program may be distributed via a network, such as the Internet. Furthermore, the program may be executed by being recorded in a computer readable medium, such as a hard disk, a flexible disk (FD), a CD-ROM, a magneto-optical disk (MO), or a digital versatile disk (DVD), and being read from the recording medium by the computer.

According to the present invention, an advantage is provided in that it is possible for a user to set a combination condition of output results of a plurality of AI logics and obtain an appropriate reaction with respect to an event that has occurred.

## Claims

1. An image analysis apparatus (10) comprising:
a storage unit (14) that stores therein a plurality of machine learning models each of which outputs targets included in image data;
an acceptance unit (15a) that accepts selection of the machine learning model from among the plurality of machine learning models and also accepts a priority order that is associated with a combination of the targets;
an acquisition unit (15b) that acquires the image data; and
an execution unit (15c) that inputs the acquired image data to the machine learning model for which the selection has been accepted and that executes a predetermined reaction in accordance with the priority order that is associated with the output combination of the targets,
**characterized in that**
the acceptance unit accepts the priority order associated with the combination of an attribute of a person, an occurrence time of an event, a behavior of the person, and an object linked to the behavior as the combination of the targets, the attribute of the person including an indication of whether the person is authorized for the combination of the occurrence time, the behavior, and the object.

2. The image analysis apparatus (10) according to claim 1, wherein
the storage unit (14) stores therein the plurality of machine learning models for each category of the targets to be output,
the acceptance unit (15a) accepts the selection of the machine learning model from among the plurality of machine learning models for each of the categories and also accepts the priority order that is associated with the combination of the targets for each of the categories, and
the execution unit (15c) inputs the acquired image data to the machine learning model for which the selection has been accepted for each of the categories, and executes the predetermined reaction in accordance with the priority order that is associated with the output combination of the targets for each of the categories.

3. The image analysis apparatus (10) according to claim 1 or 2, wherein the acceptance unit (15a) presents a list of the plurality of machine learning models for each category of the targets, and causes a user terminal that is used by a user to display a setting screen in which an input of the selection of the machine learning model is accepted for each of the categories.

4. The image analysis apparatus (10) according to any one of claims 1 to 3, wherein the acceptance unit (15a) presents a list of the plurality of machine learning models for each category of the targets, and causes a user terminal that is used by a user to display a setting screen in which a list of the targets output by each of the plurality of machine learning models is presented.

5. The image analysis apparatus (10) according to any one of claims 1 to 4, wherein the acceptance unit (15a) presents a list of the targets output by the machine learning model for which the selection has been accepted for each category of the targets, and causes a user terminal that is used by a user to display a setting screen in which an input of the combination of the targets for each of the categories and an input of the priority order for each of the combinations are accepted.

6. The image analysis apparatus (10) according to any one of claims 1 to 5, wherein the acquisition unit (15b) acquires the image data that has been captured and transmitted by an image capturing device that is installed in a facility that is managed by a user.

7. The image analysis apparatus (10) according to any one of claims 1 to 6, wherein the execution unit (15c) executes at least one of processes of notifying a user of an alarm, recording the image data, and recording the output targets, in accordance with the priority order, as the predetermined reaction that has been set by the user.

8. An image analysis method that causes a computer (10) to execute a process comprising:
accepting selection of the machine learning model from among the plurality of machine learning models each of which outputs targets included in image data and also accepting a priority order that is associated with a combination of the targets;
acquiring the data;
inputting the acquired image data to the machine learning model for which the selection has been accepted and executing a predetermined reaction in accordance with the priority order that is associated with the output combination of the targets; and
accepting the priority order associated with the combination of an attribute of a person, an occurrence time of an event, a behavior of the person, and an object linked to the behavior as the combination of the targets, wherein the attribute of the person includes an indication of whether the person is authorized for the combination of the occurrence time, the behavior, and the object.

9. An image analysis program that causes a computer (10) to execute a process comprising:
accepting selection of the machine learning model from among the plurality of machine learning models each of which outputs targets included in image data and also accepting a priority order that is associated with a combination of the targets;
acquiring the data;
inputting the acquired image data to the machine learning model for which the selection has been accepted and executing a predetermined reaction in accordance with the degree of importance that is associated with the output combination of the targets; and
accepting the priority order associated with the combination of an attribute of a person, an occurrence time of an event, a behavior of the person, and an object linked to the behavior as the combination of the targets, wherein the attribute of the person includes an indication of whether the person is authorized for the combination of the occurrence time, the behavior, and the object.

## Patentansprüche

1. Bildanalyseapparat (10), der aufweist:
eine Speichereinheit (14), die darin eine Vielzahl von Maschinenlernmodellen speichert, von denen jedes Ziele ausgibt, die in Bilddaten enthalten sind;
eine Annahmeeinheit (15a), die eine Auswahl des Maschinenlernmodells aus der Vielzahl von Maschinenlernmodellen annimmt und auch eine Prioritätsreihenfolge annimmt, die einer Kombination aus den Zielen zugeordnet ist;
eine Erlangungseinheit (15b), die die Bilddaten erlangt; und
eine Ausführungseinheit (15c), die die erlangten Bilddaten in das Maschinenlernmodell, für das die Auswahl angenommen worden ist, eingibt und die eine vorbestimmte Reaktion in Übereinstimmung mit der Prioritätsreihenfolge, die der Ausgabekombination aus den Zielen zugeordnet ist, ausführt,
**dadurch gekennzeichnet, dass**
die Annahmeeinheit die Prioritätsreihenfolge, die der Kombination aus einem Attributs einer Person, einer Eintrittszeit eines Ereignisses, einem Verhalten der Person und einem Objekt, das mit dem Verhalten verknüpft ist, zugeordnet ist, als die Kombination aus den Zielen annimmt, wobei das Attribut der Person eine Angabe darüber enthält, ob die Person für die Kombination aus der Eintrittszeit, dem Verhalten und dem Objekt autorisiert ist.

2. Bildanalyseapparat (10) nach Anspruch 1, wobei
die Speichereinheit (14) darin die Vielzahl von Maschinenlernmodellen für jede Kategorie der auszugebenden Ziele speichert,
die Annahmeeinheit (15a) die Auswahl des Maschinenlernmodells aus der Vielzahl von Maschinenlernmodellen für jede der Kategorien annimmt und auch die Prioritätsreihenfolge, die der Kombination aus den Zielen für jede der Kategorien zugeordnet ist, annimmt, und
die Ausführungseinheit (15c) die erlangten Bilddaten in das Maschinenlernmodell, für das die Auswahl angenommen worden ist, für jede der Kategorien eingibt und die vorbestimmte Reaktion in Übereinstimmung mit der Prioritätsreihenfolge, die der Ausgabekombination aus den Zielen für jede der Kategorien zugeordnet ist, ausführt.

3. Bildanalyseapparat (10) nach Anspruch 1 oder 2, wobei die Annahmeeinheit (15a) eine Liste der Vielzahl von Maschinenlernmodellen für jede Kategorie der Ziele präsentiert und ein Benutzerendgerät, das von einem Benutzer verwendet wird, veranlasst, einen Einstellungsbildschirm anzuzeigen, in dem eine Eingabe der Auswahl des Maschinenlernmodells für jede der Kategorien angenommen wird.

4. Bildanalyseapparat (10) nach einem der Ansprüche 1 bis 3, wobei die Annahmeeinheit (15a) eine Liste der Vielzahl von Maschinenlernmodellen für jede Kategorie der Ziele präsentiert und ein Benutzerendgerät, das von einem Benutzer verwendet wird, veranlasst, einen Einstellungsbildschirm anzuzeigen, in dem eine Liste der Ziele, die von jedem der Vielzahl von Maschinenlernmodellen ausgegeben werden, präsentiert wird.

5. Bildanalyseapparat (10) nach einem der Ansprüche 1 bis 4, wobei die Annahmeeinheit (15a) eine Liste der Ziele, die von dem Maschinenlernmodell ausgegeben werden, für das die Auswahl angenommen worden ist, für jede Kategorie der Ziele präsentiert und ein Benutzerendgerät, das von einem Benutzer verwendet wird, veranlasst, einen Einstellungsbildschirm anzuzeigen, in dem eine Eingabe der Kombination aus den Zielen für jede der Kategorien und eine Eingabe der Prioritätsreihenfolge für jede der Kombinationen angenommen werden.

6. Bildanalyseapparat (10) nach einem der Ansprüche 1 bis 5, wobei die Erlangungseinheit (15b) die Bilddaten erlangt, die von einer Bildaufnahmevorrichtung, die in einer Einrichtung installiert ist, die von einem Benutzer verwaltet wird, aufgenommen und übertragen worden sind.

7. Bildanalyseapparat (10) nach einem der Ansprüche 1 bis 6, wobei die Ausführungseinheit (15c) mindestens einen der Prozesse, Prozess eines Benachrichtigens eines Benutzers über einen Alarm, Aufzeichnen der Bilddaten und Aufzeichnen der Ausgabeziele, in Übereinstimmung mit der Prioritätsreihenfolge als die vorbestimmte Reaktion, die von dem Benutzer eingestellt worden ist, ausführt.

8. Bildanalyseverfahren, das einen Computer (10) veranlasst, einen Prozess auszuführen, der aufweist:
ein Annehmen einer Auswahl des Maschinenlernmodells aus der Vielzahl von Maschinenlernmodellen, von denen jedes Ziele ausgibt, die in Bilddaten enthalten sind, und ebenfalls ein Annehmen einer Prioritätsreihenfolge, die einer Kombination aus den Zielen zugeordnet ist;
ein Erlangen der Daten;
ein Eingeben der erlangten Bilddaten in das Maschinenlernmodell, für das die Auswahl angenommen worden ist, und ein Ausführen einer vorbestimmten Reaktion in Übereinstimmung mit der Prioritätsreihenfolge, die der Ausgabekombination aus den Zielen zugeordnet ist; und
ein Annehmen der Prioritätsreihenfolge, die der Kombination aus einem Attribut einer Person, einer Eintrittszeit eines Ereignisses, einem Verhalten der Person und einem Objekt, das mit dem Verhalten verknüpft ist, zugeordnet ist, als die Kombination aus den Zielen, wobei das Attribut der Person eine Angabe darüber enthält, ob die Person für die Kombination aus der Eintrittszeit, dem Verhalten und dem Objekt autorisiert ist.

9. Bildanalyseprogramm, das einen Computer (10) veranlasst, einen Prozess auszuführen, der aufweist:
ein Annehmen einer Auswahl des Maschinenlernmodells aus der Vielzahl von Maschinenlernmodellen, von denen jedes Ziele ausgibt, die in Bilddaten enthalten sind, und ebenfalls ein Annehmen einer Prioritätsreihenfolge, die einer Kombination aus den Zielen zugeordnet ist;
ein Erlangen der Daten;
ein Eingeben der erlangten Bilddaten in das Maschinenlernmodell, für das die Auswahl angenommen worden ist, und ein Ausführen einer vorbestimmten Reaktion in Übereinstimmung mit dem Wichtigkeitsgrad, der der Ausgabekombination aus den Zielen zugeordnet ist; und
ein Annehmen der Prioritätsreihenfolge, die der Kombination aus einem Attribut einer Person, einer Eintrittszeit eines Ereignisses, einem Verhalten der Person und einem Objekt, das mit dem Verhalten verknüpft ist, zugeordnet ist, als die Kombination aus den Zielen, wobei das Attribut der Person eine Angabe darüber enthält, ob die Person für die Kombination aus der Eintrittszeit, dem Verhalten und dem Objekt autorisiert ist.

## Revendications

1. Appareil d'analyse d'image (10) comprenant :
une unité de stockage (14) qui stocke une pluralité de modèles d'apprentissage automatique dont chacun produit en sortie des cibles incluses dans des données d'image ;
une unité d'acceptation (15a) qui accepte la sélection du modèle d'apprentissage automatique parmi la pluralité de modèles d'apprentissage automatique et accepte également un ordre de priorité qui est associé à une combinaison des cibles ;
une unité d'acquisition (15b) qui acquiert les données d'image ; et
une unité d'exécution (15c) qui introduit les données d'image acquises dans le modèle d'apprentissage automatique pour lequel la sélection a été acceptée et qui exécute une réaction prédéterminée conformément à l'ordre de priorité qui est associé à la combinaison des cibles produite en sortie,
**caractérisé en ce que**
l'unité d'acceptation accepte l'ordre de priorité associé à la combinaison d'un attribut d'une personne, d'un moment de survenance d'un événement, d'un comportement de la personne et d'un objet lié au comportement au titre de la combinaison des cibles, l'attribut de la personne incluant une indication spécifiant si la personne est autorisée par rapport à la combinaison du moment de survenance, du comportement et de l'objet.

2. Appareil d'analyse d'image (10) selon la revendication 1, dans lequel
l'unité de stockage (14) stocke la pluralité de modèles d'apprentissage automatique pour chaque catégorie des cibles à produire,
l'unité d'acceptation (15a) accepte la sélection du modèle d'apprentissage automatique parmi la pluralité de modèles d'apprentissage automatique pour chacune des catégories et accepte également l'ordre de priorité qui est associé à la combinaison des cibles pour chacune des catégories, et
l'unité d'exécution (15c) introduit les données d'image acquises dans le modèle d'apprentissage automatique pour lequel la sélection a été acceptée pour chacune des catégories, et exécute la réaction prédéterminée conformément à l'ordre de priorité qui est associé à la combinaison des cibles produite en sortie pour chacune des catégories.

3. Appareil d'analyse d'image (10) selon la revendication 1 ou 2, dans lequel l'unité d'acceptation (15a) présente une liste de la pluralité de modèles d'apprentissage automatique pour chaque catégorie des cibles, et amène un terminal utilisateur qui est utilisé par un utilisateur à afficher un écran de paramétrage dans lequel une entrée de sélection du modèle d'apprentissage automatique est acceptée pour chacune des catégories.

4. Appareil d'analyse d'image (10) selon l'une quelconque des revendications 1 à 3, dans lequel l'unité d'acceptation (15a) présente une liste de la pluralité de modèles d'apprentissage automatique pour chaque catégorie des cibles, et amène un terminal utilisateur qui est utilisé par un utilisateur à afficher un écran de paramétrage dans lequel une liste des cibles produites en sortie par chacun de la pluralité de modèles d'apprentissage automatique est présentée.

5. Appareil d'analyse d'image (10) selon l'une quelconque des revendications 1 à 4, dans lequel l'unité d'acceptation (15a) présente une liste des cibles produites par le modèle d'apprentissage automatique pour lequel la sélection a été acceptée pour chaque catégorie des cibles, et amène un terminal utilisateur qui est utilisé par un utilisateur à afficher un écran de paramétrage dans lequel une entrée de la combinaison des cibles pour chacune des catégories et une entrée de l'ordre de priorité pour chacune des combinaisons sont acceptées.

6. Appareil d'analyse d'image (10) selon l'une quelconque des revendications 1 à 5, dans lequel l'unité d'acquisition (15b) acquiert les données d'image qui ont été capturées et transmises par un dispositif de capture d'images qui est installé dans une installation gérée par un utilisateur.

7. Appareil d'analyse d'image (10) selon l'une quelconque des revendications 1 à 6, dans lequel l'unité d'exécution (15c) exécute au moins un des processus suivants : notification d'une alarme à un utilisateur, enregistrement des données d'image et enregistrement des cibles de sortie, conformément à l'ordre de priorité, au titre de la réaction prédéterminée définie par l'utilisateur.

8. Procédé d'analyse d'image qui amène un ordinateur (10) à exécuter un processus comprenant :
l'acceptation d'une sélection du modèle d'apprentissage automatique parmi la pluralité de modèles d'apprentissage automatique dont chacun produit en sortie des cibles incluses dans des données d'image et également l'acceptation d'un ordre de priorité qui est associé à une combinaison des cibles ;
l'acquisition des données ;
l'introduction des données d'image acquises dans le modèle d'apprentissage automatique pour lequel la sélection a été acceptée et l'exécution d'une réaction prédéterminée conformément à l'ordre de priorité qui est associé à la combinaison des cibles en sortie ; et
l'acceptation de l'ordre de priorité associé à la combinaison d'un attribut d'une personne, d'un moment de survenance d'un événement, d'un comportement de la personne et d'un objet lié au comportement au titre de la combinaison des cibles, dans lequel l'attribut de la personne inclut une indication spécifiant si la personne est autorisée par rapport à la combinaison du moment de survenance, du comportement et de l'objet.

9. Programme d'analyse d'image qui amène un ordinateur (10) à exécuter un processus comprenant :
l'acceptation d'une sélection du modèle d'apprentissage automatique parmi la pluralité de modèles d'apprentissage automatique dont chacun produit en sortie des cibles incluses dans des données d'image et, également, l'acceptation d'un ordre de priorité qui est associé à une combinaison des cibles ;
l'acquisition des données ;
l'introduction des données d'image acquises dans le modèle d'apprentissage automatique pour lequel la sélection a été acceptée et l'exécution d'une réaction prédéterminée en fonction du degré d'importance qui est associé à la combinaison de cibles produite en sortie ;
l'acceptation de l'ordre de priorité associé à la combinaison d'un attribut d'une personne, d'un moment de survenance d'un événement, d'un comportement de la personne et d'un objet lié au comportement au titre de la combinaison des cibles, dans lequel l'attribut de la personne inclut une indication spécifiant si la personne est autorisée par rapport à la combinaison du moment de survenance, du comportement et de l'objet.
